# EUROPEAN PATENT APPLICATION

(11) **EP 4 415 141 A1**
(43) Date of publication of application: **14.08.2024**
(21) Application number: 23812133.9
(22) Date of filing: 24.05.2023
(51) Int. Cl.: H01M 50/284, H01M 50/209, H01M 50/218, H01M 50/242, H01M 50/293, H01M 50/591, H01M 50/593

(54) **BATTERY PACK**

(30) Priority: 24.05.2022 KR 20220063157
(71) Applicant: LG Energy Solution, Ltd., Seoul 07335 (KR)
(72) Inventor: JUNG, Dae Ho, Daejeon 34122 (KR); OH, Sung Jin, Daejeon 34122 (KR)
(74) Representative: Goddar, Heinz J.
(86) International application number: PCT/KR2023/007047
(87) International publication number: WO 2023/229359

(57) **Abstract**

A battery pack related to one example of the present invention comprises at least one battery cell, a circuit module having element components mounted on a mounting surface and electrically connected to the battery cell, a pack frame having a cell seating part in which the battery cell is seated and a module seating part on which the circuit module is seated, and a module support part inserted into the module seating part to support the circuit module and provided to be elastically deformable upon contacting the element components.

## Description

### Technical Field

The present invention relates to a battery pack, and particularly, relates to a battery pack capable of elastically supporting a circuit module and reinforcing rigidity of a pack frame.

This application claims the benefit of priority based on Korean Patent Application No. 10-2022-0063157 dated May 24, 2022, the disclosure of which is incorporated herein by reference in its entirety.

### Background Art

As technology development and demand for portable devices increase, the demand for battery cells as a power supply device rapidly increases. Depending on the type of portable device, it is also used in the form of a single battery cell, or it is also used in the form that a number of battery cells are electrically connected.

In order for a battery pack comprising a number of battery cells or a single battery cell to stably operate for a long period of time, electrical connections between components constituting the battery pack must be stably made. In particular, electrical connections and components of the battery pack should not be damaged by external factors such as static electricity (ESD) during operation.

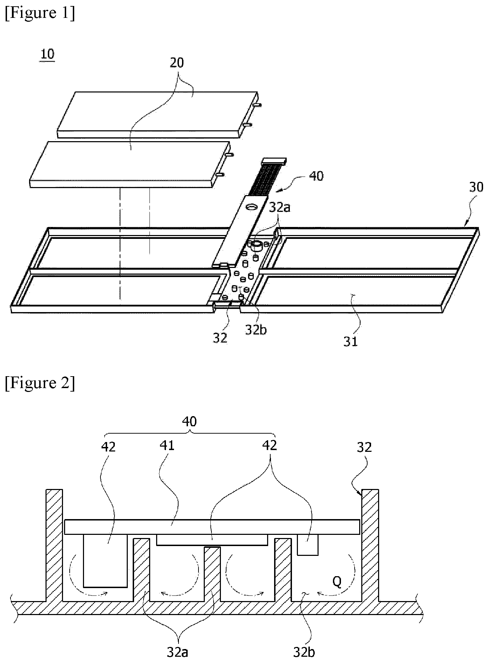

Figures 1 and 2 are diagram for explaining a structure of a conventional battery pack.

Referring to Figures 1 and 2, a conventional notebook battery pack (10) comprises a plurality of battery cells (20), a pack frame (30), and a circuit module (40).

The circuit module (40) is composed of a substrate (41), and a plurality of elements (42) mounted on the substrate (41). Since the elements (42) have different specifications according to their functions, the elements (42) having different specifications are arranged, whereby height differences occur between the elements (42) protruding from one side of the substrate (41).

In addition, the pack frame (30) comprises a module seating part (32) on which the circuit module (40) is seated, where in order to protect the elements (42) from external impacts, the module seating part (32) is manufactured considering the arrangement of the elements (42) mounted on the substrate (41) and the heights of the elements (42).

The module seating part (32) comprises a plurality of support ribs (32, 32a) for providing a space in which the circuit module (40) is seated and accommodated, where the plurality of support ribs (32, 32a) is provided to stably support the respective elements (42) while reinforcing the rigidity of the portions where the circuit module (40) is seated. Furthermore, a space (32b), in which the element (42) is disposed, is formed between the adjacent support ribs (32, 32a).

Meanwhile, the plurality of support ribs (32, 32a) is provided at various heights to correspond to the arrangement and heights of the elements (42), and as a result, there is a problem that the internal structure of the pack frame (30) becomes complicated and the manufacturing cost of the pack frame (30) increases.

Also, conventionally, as the structure of the module seating part (32) supporting the circuit module (40) is changed according to the design of the circuit module (40), there is a problem that a new pack frame (30) must be manufactured.

In addition, since the conventional battery pack (10) has spaces (32b) between the circuit module (40) and the pack frame (30), convention occurs in the spaces (32 b) by the heat (Q) generated in the circuit module (40), and accordingly, there is a problem that a heat dissipation efficiency is lowered.

### Disclosure

### Technical Problem

The present invention is intended to provide a battery pack having a module support part capable of replacing a support rib injection-molded in a pack frame to support a conventional circuit module.

Also, the present invention is intended to provide a battery pack capable of elastically supporting a circuit module and reinforcing rigidity of a pack frame.

In addition, the present invention is intended to provide a battery pack that as a module support part is filled in spaces between a circuit module and a pack frame, the heat generated in a circuit module can be transferred to the pack frame through the module support part.

### Technical Solution

In order to solve the above-described problems, a battery pack according to one example of the present invention comprises at least one battery cell, a circuit module having element components mounted on a mounting surface and electrically connected to the battery cell, a pack frame having a cell seating part in which the battery cell is seated and a module seating part on which the circuit module is seated, and a module support part inserted into the module seating part to support the circuit module and provided to be elastically deformable upon contacting the element components.

Also, the module support part may be formed of an elastic material.

In addition, the module support part may have a contact surface facing the mounting surface and provided to be elastically deformable upon contacting the element components.

Furthermore, the module support part may have a block shape disposed between the module seating part and the mounting surface.

The module seating part may have a pair of sidewalls and a seating surface provided between the pair of sidewalls, and the module support part may be inserted into a space formed by the pair of sidewalls and the seating surface.

Also, the seating surface may be provided as a flat surface.

In addition, the module support part may be disposed to contact the pair of sidewalls and the seating surface, respectively.

Furthermore, the circuit module may be disposed between the pair of sidewalls such that the mounting surface faces the seating surface.

Also, the module support part may be provided so as not to have any rib protruding into the space from the seating surface.

In addition, the module seating part may have at least one first opening penetrating the seating surface up and down.

Furthermore, the cell seating part and the module seating part may be provided to be partitioned within the pack frame.

Also, the cell seating part may have at least one second opening penetrating the pack frame. In addition, the second opening may be provided to expose a partial region of the battery cell to the outside when the battery cell is seated in the cell seating part.

In addition, the module support part may be formed of a thermoplastic polyester elastomer material.

Furthermore, the module support may have a shore hardness within a range of D25 to D40.

In addition, the battery pack may further comprise a protective cover mounted on the pack frame and surrounding the circuit module.

### Advantageous Effects

As described above, the battery pack related to one example of the present invention has the following effects.

The support rib injection-molded in the pack frame can be replaced with the module support part to conform to the conventional circuit module design, and the module support part can reinforce the rigidity of the pack frame while elastically supporting the circuit module.

As the shape of the module support part is changed according to the arrangement of the element components of the circuit module and the heights of the element components, the module support part can elastically support the element components of the circuit module, and can stably buffer the impacts applied to the circuit module upon external impact.

In addition, as the module support part fills the space between the circuit module and the pack frame, the heat generated in the circuit module can be transferred to the pack frame through the module support part without causing convection in the space. Accordingly, it is possible to improve the heat dissipation efficiency of the circuit module.

The conventional pack frame has the complicated structure of the pack frame as support ribs are provided in accordance with the arrangement and heights of the element components of the circuit module at the portion where the circuit module is seated, whereas the present invention can simplify the structure of the pack frame through the block-shaped module support part.

In addition, since there is no need to change the structure of the pack frame according to the design change of the circuit module, it is possible to reduce the manufacturing cost of the pack frame, and it is possible to improve the production efficiency.

Conventionally, the circuit module is assembled to the pack frame according to the arrangement of the element components of the circuit module, and the support ribs, whereas the present invention can simplify the assembly process in a method of disposing the module support part on the module seating part of the pack frame, and then seating the circuit module on the module support part.

### Description of Drawings

Figures 1 and 2 are diagrams for explaining a structure of a conventional battery pack.
Figure 3 is a diagram for explaining a structure of a battery pack according to a first example of the present invention.
Figures 4 and 5 are diagrams for explaining a cross-sectional structure of a battery pack according to a first example of the present invention and a transfer path of heat generated in a circuit module.
Figure 6 is diagrams for explaining a process of assembling a battery pack according to a first example of the present invention.
Figures 7 and 8 are diagrams for explaining a structure of a battery pack according to a second example of the present invention.

### Mode for Invention

Hereinafter, a battery pack according to one example of the present invention will be described in detail with reference to the accompanying drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

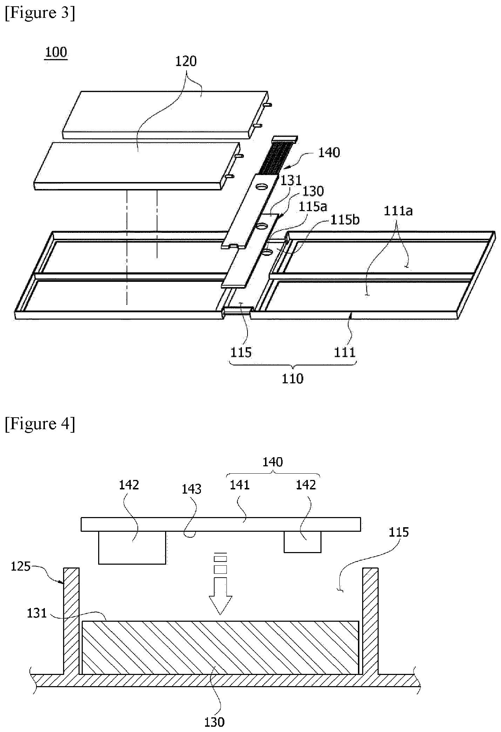

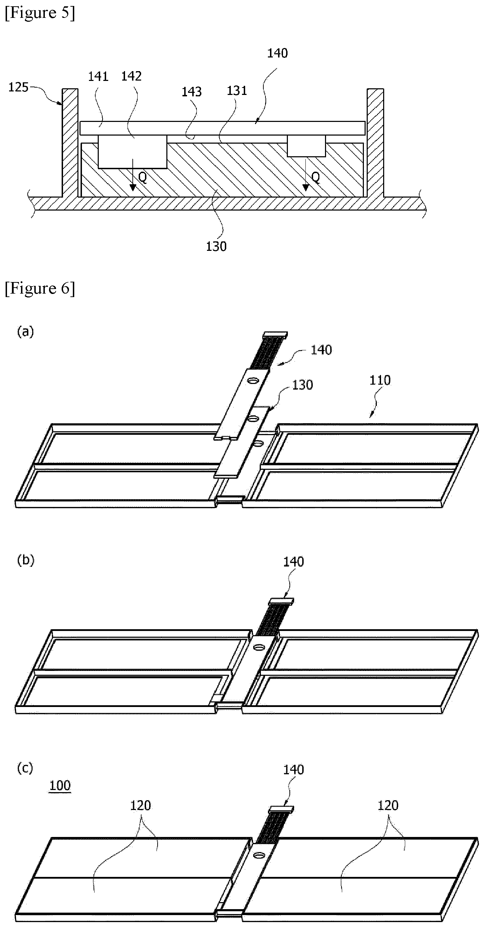

Figure 3 is a diagram for explaining a structure of a battery pack (100) according to a first example of the present invention, and Figures 4 and 5 are diagrams for explaining a cross-sectional structure of a battery pack according to a first example of the present invention and a transfer path of heat generated in a circuit module.

Also, Figure 6 is a view for explaining an assembly process of the battery pack according to the first example of the present invention.

The battery pack (100) according to the first example of the present invention comprises a pack frame (110), a battery cell (120), a module support (130), and a circuit module (140).

The battery pack (100) includes at least one battery cell (120), a circuit module (140) having element components (142) mounted on a mounting surface (143) and electrically connected to the battery cell (120), a pack frame (110) having a cell seating part (111) on which the cell (120) is seated and a module seating part (115) on which the circuit module (140) is seated, and a module support part (130) inserted into the module seating part (115) to support the circuit module (140) and provided to be elastically deformable upon contacting the element components (142).

The battery cell (120) is a rechargeable secondary battery. The battery cell (120) may be composed of a lithium-ion battery. For example, the battery cell (120) may comprise an electrode assembly and a case accommodating the electrode assembly, where the case may be a cylindrical can or a pouch.

In addition, the electrode assembly may be manufactured by sequentially laminating a positive electrode plate, a separator, and a negative electrode plate in a plurality of times. In this example, the case where the battery cell (120) is a lithium-ion battery has been described, but the present invention is not limited thereto. As another example, the battery cell (120) may be implemented as a nickel-cadmium battery or a nickel-hydrogen battery.

A negative electrode tab and a positive electrode tab may protrude from one side of the battery cell (120). The negative electrode tab is electrically connected to the negative electrode plate of the electrode assembly and the positive electrode tab is electrically connected to the positive electrode plate of the electrode assembly.

The battery pack (100) may comprise a single battery cell (120) or a plurality of battery cells (120).

In addition, the circuit module (140) is electrically connected to the battery cell (120), which may have a protection circuit controlling overcharge, over-discharge, and overcurrent of the battery cell (120).

The circuit module (140) comprises a substrate (141) and a plurality of element components (142) mounted on the substrate (141). A circuit is formed on the substrate (141). In this specification, one surface of the substrate (141) on which the circuit is provided and the element components (142) are mounted is referred to as a "mounting surface (143)".

In addition, the element components (142) are mounted in the circuit region on the substrate (141). The element components (142) may selectively comprise safety elements composed of passive elements such as resistors and capacitors or active elements such as field transistors, or integrated circuits.

The pack frame (110) supports and protects the battery cells (120) and the circuit module (140). A protective cover (not shown) may be coupled to the pack frame (110). The protective cover (not shown) is installed on the pack frame (110) to cover the circuit module (140), thereby protecting the circuit module (140).

The pack frame (110) is provided with a cell seating part (111) and a module seating part (115). Here, the cell seating part (111) refers to a portion where the battery cell (120) is seated. Then, the module seating part (115) refers to a portion where the circuit module (140) is seated. Also, the cell seating part (111) and the module seating part (115) may be provided to be partitioned within the pack frame.

In addition, a plurality of cell seating parts (111) may be provided according to the installation number of the battery cells (120). In this example, for convenience of explanation, the pack frame (110) applied to a notebook will be described as an example.

The cell seating part (111) has an open structure in the insertion direction of the battery cell (120). The cell seating part (111) is provided so that the battery cell (120) is detachably fitted and coupled. The cell seating part (111) is provided to surround an edge region including the side surfaces of the battery cell (120), and sideways supports the battery cell (120).

Also, the cell seating part (111) may have at least one second opening (111a) penetrating the pack frame (110). In addition, the second opening (111a) may be provided to expose a partial region of the battery cell (120) to the outside when the battery cell (120) is seated on the cell seating part (111).

For example, at least one second opening (111a) may be provided to penetrate the pack frame (110) up and down in the insertion direction of the battery cell (120). Here, the second opening (111a) may have a smaller area than the cross-sectional area of the battery cell (120).

When the battery cell (120) is inserted into the cell seating part (111), the second opening (111a) exposes a partial region of the battery cell (120) to the outside. Accordingly, the cell seating part (111) minimizes the contact area with the battery cell (120), so that heat of the battery cell (120) can be easily transferred to the outside through the second opening (111a).

In addition, the module seating part (115) is provided to support the module support part (130). In addition, the module seating part (115) may have a size capable of seating the module support part (130) and the circuit module (140) thereon.

As one example, the module seating part (115) has a pair of sidewalls (125) and a seating surface (115b) provided between the pair of sidewalls (125). The module seating part (115) may be provided in the form of a groove provided with the seating surface (115b).

The module support part (130) may be inserted into a space formed by the pair of sidewalls (125) and the seating surface. Also, the seating surface (115b) may be provided as a flat surface. In addition, the module support part (130) may be provided so as not to have ribs (reference numerals 32 and 32a in Figure 1) protruding from the seating surface (115b) into the space.

In addition, the module seating part (115) may have at least one first opening (115a) penetrating the seating surface (115b) up and down.

Referring to Figure 4, the module support part (130) is inserted into the module seating part (115) to be disposed between the seating surface (115b) of the module seating part (115) and the mounting surface (143), and supports the circuit module (140).

Also, the module support part (130) may have a contact surface (131) facing the mounting surface (143) and provided to be elastically deformable upon contacting the element components (142).

In addition, the module support part (130) may have a block shape disposed between the module seating part (115) and the mounting surface (143).

Furthermore, the module support part (130) may be disposed to contact the pair of sidewalls (125) and the seating surface (115b), respectively.

Referring to Figures 4 and 5, the circuit module (140) may be disposed between the pair of sidewalls (125) such that the mounting surface (143) faces the seating surface (115b).

As described above, the module support part (130) may have a block structure corresponding to the shape of the module seating part (115), and the module support part (130) is inserted into the module seating part (115), thereby filling the space between the seating surface (115b) and the mounting surface (143). According to such a structure, the module support part (130) can reinforce the rigidity of the module seating part (115).

The module support part (130) is made of an elastic material, which is deformable when the contact surface (131) in contact with the circuit module comes into contact with the element components (142) mounted on the circuit module (140), and the module support part (130) elastically supports the circuit module (140).

Referring to Figure 5, the module support (130) may be deformed to conform to the shapes of the element components (142), while the contact surface (131) in contact with the circuit module (140) is pressed by the element components (142) provided in the circuit module (140). In such a structure, the module support part (130) protects the element components (142) of the circuit module (140), and buffers the impacts transmitted to the circuit module (140) upon external impact.

In addition, the module support (130) may be formed of a thermoplastic polyester elastomer material. The module support (130) may have a shore hardness within a range of D25 to D40.

The module support (130) is made of a material having thermal conductivity and insulation properties, which may transfer heat (Q) of the circuit module (140) to the module seating part (115).

In this way, it is possible to reinforce the rigidity of the pack frame (110) by using the module support (130), and it is possible to protect the circuit module (140) by buffering the impacts applied to the circuit module (140) upon external impact.

In addition, the module support (130) is disposed between the pack frame (110) and the circuit module (140), so that the shape of the contact surface (131) may be changed according to the arrangement of the element components (142) in the circuit module (140) and the heights between the element components (142). In this way, by elastically supporting the element components (142) of the circuit module (140), it is possible to stably buffer the impacts applied to the circuit module (140) upon external impact.

The present invention provides a device comprising the battery pack as a power source. The device may be a mobile phone, a portable computer, a smart phone, a tablet PC, or a wearable electronic device.

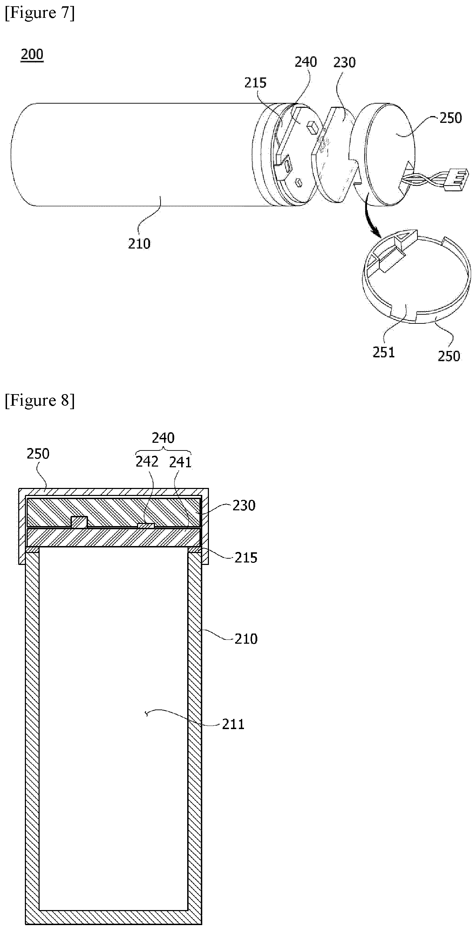

Figures 7 and 8 are diagrams for explaining a structure of a battery pack according to a second example of the present invention.

Referring to Figures 7 and 8, the battery pack (200) according to the second example of the present invention may further comprise a protective cover (250) mounted on the pack frame and surrounding the circuit module.

Specifically, the battery pack (200) comprises a pack frame (210), a battery cell (not shown), a module support part (230), a circuit module (240), and a protective cover (250). The battery pack (200) according to this example may comprise a cylindrical battery cell.

The pack frame (210) is a case protecting the battery cells and the circuit module (240). The pack frame (210) is provided with a cell seating part and a module seating part.

The cell seating part (211) has an open structure in the insertion direction of the battery cell. The cell seating part (211) has a cylindrical structure into which the battery cell can be inserted. A module seating part (215) is provided on one side of the cell seating part (211).

The circuit module (240) is seated on the module seating part (215). The circuit module (240) comprises element components (242) mounted on the mounting surface of the substrate (241), and the circuit module (230) is electrically connected to the battery cell. In this example, the circuit module (240) may be coupled to the module seating part so that the element components (242) face the cover surface (251) of the protective cover (250).

In addition, the protective cover (250) is coupled to the pack frame (210) to protect the circuit module (240). The protective cover (250) has a groove structure provided with a cover surface (251). Here, the cover surface (251) is an inner side bottom surface of the protective cover (250).

Unlike the first example as described above, the module support part (230) according to the present example is installed between the circuit module (240) and the protective cover (250). The module support part (230) may have a block structure capable of covering the circuit module (240) and being injected into the protective cover (250). Also, the module support part (230) is provided to fill a space between the mounting surface of the substrate (241) and the cover surface (251), which may reinforce the rigidity of the protective cover (250). The module support part (230) may have a shore hardness within a range of D25 to D40.

In addition, the module support part (230) is made of an elastic material, which elastically supports the circuit module (240) as the surface in contact with the circuit module (240) is deformed to correspond to the element components (242) mounted on the circuit module (240). As one example, the module support part (230) may be formed of a thermoplastic polyester elastomer material. Furthermore, the module support part (230) is made of a material having thermal conductivity and insulation properties, which may transfer heat of the circuit module (240) to the protective cover (250).

Specifically, the module support part (230) is disposed so that one side is in contact with the cover surface (251) and the other side is in contact with the circuit module (240). In such a structure, one side of the module support part (230) in contact with the circuit module (240) is deformed due to the element components (242) mounted on the circuit module (240) by the force that the protective cover (250) is coupled to the pack frame (210) and pressurizes the module support part (230), thereby elastically supporting the circuit module (240).

In this example, as heat generated in the circuit module (240) during driving of the battery cell is transferred to the protective cover (250) through the module support part (230), it is possible to lower the temperature by 5°C or more under the same conditions compared to a conventional battery pack. That is, it is possible to improve the cooling efficiency of the battery pack.

One example of the present invention as described above has been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the battery pack related to one example of the present invention, the support rib injection-molded in the pack frame can be replaced with the module support part to conform to the conventional circuit module design, and the module support part can reinforce the rigidity of the pack frame while elastically supporting the circuit module.

## Claims

1. A battery pack comprising:
at least one battery cell;
a circuit module having element components mounted on a mounting surface and electrically connected to the battery cell;
a pack frame having a cell seating part in which the battery cell is seated and a module seating part on which the circuit module is seated; and
a module support part inserted into the module seating part to support the circuit module and provided to be elastically deformable upon contacting the element components.

2. The battery pack according to claim 1, wherein
the module support part is formed of an elastic material, and
the module support part has a contact surface facing the mounting surface and provided to be elastically deformable upon contacting the element components.

3. The battery pack according to claim 1, wherein
the module support part has a block shape disposed between the module seating part and the mounting surface.

4. The battery pack according to claim 1, wherein
the module seating part has a pair of sidewalls and a seating surface provided between the pair of sidewalls, and
the module support part is inserted into a space formed by the pair of sidewalls and the seating surface.

5. The battery pack according to claim 4, wherein
the seating surface is provided as a flat surface.

6. The battery pack according to claim 4, wherein
the module support part is disposed to contact the pair of sidewalls and the seating surface, respectively.

7. The battery pack according to claim 4, wherein
the circuit module is disposed between the pair of sidewalls such that the mounting surface faces the seating surface.

8. The battery pack according to claim 4, wherein
the module support part does not have any rib protruding into the space from the seating surface.

9. The battery pack according to claim 4, wherein
the module seating part has at least one first opening penetrating the seating surface up and down.

10. The battery pack according to claim 1, wherein
the cell seating part and the module seating part are provided to be partitioned within the pack frame.

11. The battery pack according to claim 10, wherein
the cell seating part has at least one second opening penetrating the pack frame.

12. The battery pack according to claim 11, wherein
the second opening is provided to expose a partial region of the battery cell to the outside when the battery cell is seated in the cell seating part.

13. The battery pack according to claim 1, wherein
the module support part is formed of a thermoplastic polyester elastomer material.

14. The battery pack according to claim 1, wherein
the module support has a shore hardness within a range of D25 to D40.

15. The battery pack according to claim 1, further comprising
a protective cover mounted on the pack frame and surrounding the circuit module.
